# EUROPEAN PATENT SPECIFICATION

(11) **EP 0 667 234 B1**
(45) Date of publication and mention of the grant of the patent: **06.05.1998**
(21) Application number: 95101773.0
(22) Date of filing: 10.02.1995
(51) Int. Cl.: B32B 27/32, B32B 5/18, G09F 3/02

(54) **Multilayer label material**
Mehrschichtiges Etikett
Etiquette multicouche

(30) Priority: 15.02.1994 US 196724
(43) Date of publication of application: 16.08.1995
(73) Proprietor: OWENS-ILLINOIS LABELS INC., Toledo, Ohio 43666 (US)
(72) Inventor: Blackwelder, Maurice W., Bardstown, Kentucky 40004 (US)
(74) Representative: Blumbach, Kramer & Partner GbR

(56) References cited:
- EP-A- 0 191 550
- EP-A- 0 390 442
- EP-A- 0 461 298
- PATENT ABSTRACTS OF JAPAN vol. 018 no. 013 (M-1539) ,11 January 1994 & JP-A-05 254528 (TOYO SEIKAN KAISHA LTD) 5 October 1993,
- DATABASE WPI Section Ch, Week 9404 Derwent Publications Ltd., London, GB; Class A18, AN 94-028902 & JP-A-05 333 785 ( CI KASEI CO LTD) , 17 December 1993
- DATABASE WPI Section Ch, Week 9213 Derwent Publications Ltd., London, GB; Class A92, AN 92-099790 & JP-A-04 041 233 ( DAINIPPON PRINTING KK) , 12 February 1992

## Description

This invention relates to multilayer label material suitable for printing and decoration which can be applied to glass and plastic containers and to a package comprising a label made from such material and a hollow container.

### Background and Summary of Invention

Expanded (foam) styrenic sheet materials coextruded with a thin unfoamed (cap) layer have been produced commercially for many years. This type of structure lacks in durability due to the predominate portion being foam, and is sensitive to tearing and chipping especially when conveying, accumulating and boxing filled labeled containers for commercial use.

Among the objectives of the present invention are to provide a label material which can be printed and decorated which has greater durability and is less sensitive to tearing and chipping during handling.

In accordance with the invention, an extruded thermoplastic thin sheet material is produced that is suitable for use as labeling stock to be applied to glass or plastic containers. Requirements of such labeling stock are surface smoothness to provide a high quality printing surface, toughness to resist chipping and tearing in commercial high speed conveying and packaging of filled bottles, and waterproofness for durability in consumer use. An additional preferred attribute of the label stock is that of a thin thickness or caliper (1.5-3.0 mils) whereby the number of labels on a roll can be greater than with a thicker caliper so that in use the number of roll changes necessary in a high speed labeling operation are reduced.

In accordance with one aspect of the present invention, a coextruded label material is provided for use in wrapping hollow containers comprising
a coextruded substrate (10) comprising a thick styrenic unfoamed plastic layer (11) and a thin styrenic foam layer (12), said unfoamed plastic layer (11) comprising the predominant portion of said label material as contrasted to the foam layer (12), said unfoamed layer (11) comprising 75-85% by weight and said foam layer (12) comprising 15-25% by weight, said total thickness of said coextruded sheet substrate (10) ranges between 0,0381 mm (1.5 mils) and 0,0762 mm (3.0 mils).
In accordance with another aspect of the invention, an additional clear or translucent unfoamed plastic layer is adhered to the unfoamed layer with printing interposed between the unfoamed layers. Printing is provided on the unfoamed layer of the coextruded material or other side of the additional clear or translucent unfoamed layer.

### Description of the Drawings

FIG. 1 is a diagrammatic perspective view of a coextruded label material embodying the invention.

FIG. 2 is a diagrammatic perspective view of a modified form of label material.

FIG. 3 is a diagrammatic perspective view of a further modified form of label material.

FIG. 4 is a diagrammatic view of a method and apparatus for laminating an unfoamed layer to the coextruded label material.

### Detailed Description of the Preferred Embodiment

In accordance with one aspect of the present invention, a label material is provided which comprises a styrenic unfoamed layer and a styrenic foam layer wherein the unfoamed plastic layer is the predominant portion as contrasted to the foam plastic layer. In accordance with another aspect of the invention, an additional clear or translucent unfoamed plastic layer is adhered to the unfoamed plastic layer with printing interposed between the unfoamed plastic layers. Printing is provided on the unfoamed layer of the coextruded material or other side of the additional clear or translucent unfoamed layer.

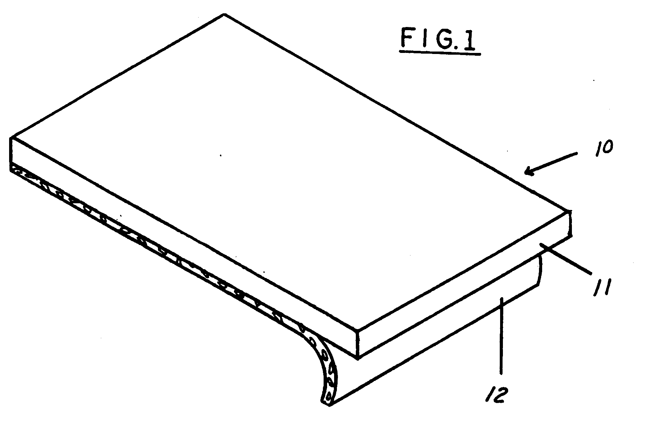

Referring to FIG. 1, a coextruded plastic label material or substrate 10 embodying the invention consists of a proportionally thicker unfoamed preferably opaque layer of styrenic plastic material 11 and a thinner foam layer 12 of styrenic plastic material. The unfoamed layer preferably includes a pigment that is opaque.

The thicker unfoamed layer 11 preferably has a thickness ranging between 0,03175 mm (1.25 mils) to 0,05715 mm (2.25 mils). For optimum properties including strength and opacity, the preferred thickness range for the unfoamed material is between 0,03175 mm (1.25 mils) to 0,033 mm (1.30 mils).

The foam layer 12 preferably has a thickness ranging between 0,0127mm (0.5 mils) and 0,0254 mm (1.0 mils).

The total thickness of the coextruded styrenic substrate 10 preferably ranges between 0,0381 mm (1.5 mils) and 0,0762 mm (3.0 mils). For optimum properties, the total thickness ranges between 0,0457 mm (1.8 mils) to 0,0508 mm (2.0 mils). When the total thickness is less than about 0,0457 mm (1.8 mils), opacity and tear strength are reduced. When the total thickness is greater than 0,0508 mm (2.0 mils), the number of labels per roll will be reduced and the labels will required more plastic.

The preferred density of the thin foam layer ranges between 320 (20 lbs/ft³) and 384 kg/m³ (24 lbs/ft³).

As used herein, styrenic plastic material comprises polystyrene and copolymers of polystyrene.

A preferred form of the coextruded styrenic label material comprises a high impact polystyrene in the unfoamed layer 11, preferably including a pigment in a fusion blend to make the unfoamed layer 11 opaque. A satisfactory pigment is Ti0₂. Styrenic type polymers are preferred for use in the substrate sheet instead of polyolefinic polymers due to their greater stiffness properties but particularly due to their improved cutting properties. The cutting of the labels during application at high speeds (400-500 bottles per minute) is often a significant problem with polyolefin type substrates requiring down-time to resharpen or replace knives. For the desired toughness and elongation, the styrene resin should therefore be a high impact polystyrene or styrene-butadiene copolymer type.

Satisfactory caliper and density of the styrenic foam layer have been achieved where the thin foam layer comprises medium impact polystyrene.

Satisfactory results have also been achieved where the styrenic foam layer 12 comprises a fusion blend of medium impact polystyrene, polypropylene, and a compatability agent such as a block styrene copolymer, as disclosed in United States Patent 4,462,455.

High impact polystyrenes for the unfoamed layer included Chevron D 7018.01 sold by Chevron Chemical Co.; Dow 498 sold by Dow Chemical Co.; Fina 825D sold by Fina Oil and Chemical Co.; and Novacor PM 2280 sold by Novacor Chemical Inc. Satisfactory medium impact polystyrenes for the foam layer include Chevron D 7034.01 and Chevron 5210 sold by Chevron Chemical Co.; and Dow 410 sold by Dow Chemical Co.

The method of coextrusion preferably utilized is that disclosed in United States Patent 5,082,608 utilizing CO₂. The amount of carbon dioxide (CO₂) usage for the foam layer described is in the range of 0.15% to 0.20% of the foam layer by weight. The carbon dioxide is generated by the addition of sodium bicarbonate and citric acid.

For preferred characteristics in shrinkage applications of the styrenic label substrate, the sheet should have greater machine direction orientation than cross direction orientation. Typical values of shrinkage observed when a sample is subjected to heat are:

| TEMPERATURE (°C) (F) | % MD SHRINKAGE | % CD SHRINKAGE |
|---|---|---|
| 99 (210) | 25.0 | 0.5 |
| 104,5 (220) | 45.0 | 6.0 |
| 110 (230) | 60.0 | 12.0 |

The thin foam layer is primarily a cushioning backing and a minor component of the structure. While the preferred cell size is in the range of 0.015 - 0.050 mm², satisfactory results have been produced in the range of 0.050 - 0.090 mm².

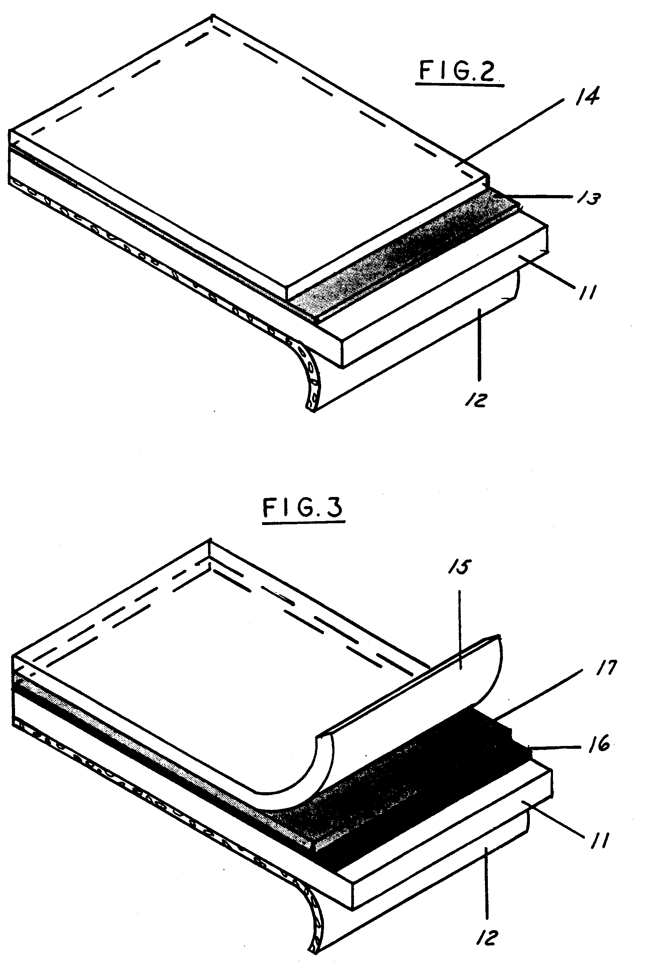

In a printed form of the label material shown in FIG. 2, printing 13 is applied to the unfoamed thick layer 11 and a protective varnish overcoat layer 14 is provided over the printing.

In another preferred form of the invention shown in FIG. 3, unfoamed clear or translucent layer 15 of plastic material is laminated to the unfoamed thick layer 11 after printing 16 is applied to the thick unfoamed layer 11. The unfoamed layer 15 is adhered to the thick unfoamed layer 11 by an adhesive layer 17.

The additional unfoamed layer 15 may vary in thickness but preferably range in thickness between 0,0102 mm (0.4 mils) and 0,0254 mm (1.0 mils). The additional unfoamed layer preferably comprises biaxially oriented polypropylene. The additional layer may also comprise polyethylene and polystyrene. Where a shrinkable label is desired, the unfoamed additional layer comprises polystyrene having a machine direction orientation in the same direction as the coextruded polystyrene substrate.

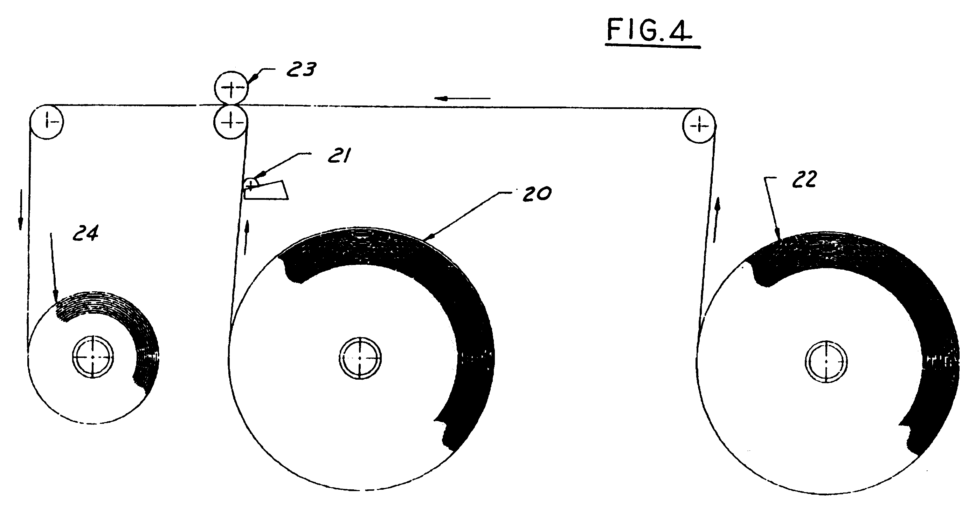

A satisfactory adhesive to make the laminate is a solventless (often also called 100% solids), two component polyurethane adhesive. Consequently, no drying oven is required. As shown in FIG. 4, adhesive is applied to the printed substrate from roll 20 by an applicator 21 and joined with the polypropylene film from roll 22 at nip rollers 23. The two components undergo a chemical reaction (cross linking) when combined which "cures" the adhesive to a solid state without release of volatiles. The laminate is then wound on a roll 24. Acceptable adhesives include Morton International's Mor-Free 216 and Morton Coreactant C-81 made by Morton International Inc., Chicago, Illinois; and TYCEL 7975 and coreactant 7276 made by Liofol Company, Cary, North Carolina.

Since in the laminated structure the inks are covered with a film of polypropylene the ink formulations may be modified requiring less durable resins and modifiers than required with just protective overgloss. This would, however, not be unique as suppliers making laminated structures would already be using such type inks.

It has been found that the label material embodying the invention has high durability, is less sensitive to tearing and chipping during handling and provides for a greater number of labels per roll resulting in a substantially reduced frequency of changing rolls in high speed labeling operations.

In the preferred mode of use, labels are cut from a roll of the laminate and wrapped about plastic or glass containers with the ends of the labels bonded to one another. Where the additional layer is polypropylene, a hot melt adhesive is satisfactory. Where the additional layer is styrenic, bonding may be by heat bonding, hot melt adhesive or solvent.

In another mode of use, labels are cut from a roll of coextruded substrate, wrapped on a container and the ends of each label are bonded to one another. The label is then shrunk on the container by moving through an oven as shown in United States patent 4,626,455.

With respect to durability and toughness, the two major requirements for label stock are resistance to tearing and the ability to stretch. In typical tests, filled labeled plastic bottles made of polyethylene terphthalate (PET) were conveyed, accumulated in groups and dropped (literally) into boxes or crates for distribution. The top and bottom edges of the label were thereafter exposed to potential scraping surfaces which can tear the labels. The chart below indicates measured tear resistance values along with Mullen burst strength which is also a measure of toughness.

| | Tear Strength (N) (lbs.) | Mullen Burst (N) (lbs.) |
|---|---|---|
| Three layer regular foam type material (0,127 mm)* (5 mils)* | 6,8-11,3 (1.5-2.5) | 68 (15) |
| Unlaminated two layer substrate | 13,6-20,4 (3.0-4.5) | 90,7 (20) |
| PP laminated two layer substrate | 40,8-54,4 (9.0-12.0) | 204 (45) |

| | | |
|---|---|---|
| * A prior existing three layer styrenic coextruded foam material consisting of a thick foam layer coextruded with a thin non-foam layer on each opposite side of the foam layer. | | |

Soda beverage bottles were filled at a cold temperature (around 5,5°C) (40 F.) and then wrapped with a label. As the bottle warms to room temperature or above, the gas in the carbonated beverage is progressively released and increases the bottle diameter which requires the label to stretch accordingly. Comparative elongation values for different materials are shown below:

| | % Elongation |
|---|---|
| Three layer regular foam type material* | 10 |
| Unlaminated two layer substrate | 35 |
| PP laminated two layer substrate | 45 |

| | |
|---|---|
| * A prior existing three layer styrenic coextruded foam material consisting of a thick foam layer coextruded with a thin non-foam layer on each opposite side of the foam layer. | |

Another advantage of the label material embodying the invention is with respect to label removal and relabeling. A label that is not correctly applied or has some form of defect such as a wrinkle or is out of register may be torn from the bottle leaving only a minor residue. This bottle may then be returned to the applicating machine for application of a fresh label.

Roll quality is significantly affected by gauge bands with thin gauge material due to the increase in roll footage or number of wraps or plies of material around the roll compared to thicker gauge materials. In other words, any caliper variation is multiplied many more times with thin caliper material as it is repeatedly wound around the roll due to the roll length. Using a 610 mm (24 inch) diameter roll for an example (with a 152 mm (6 inch) core), the footage of material in the roll at a few selected calipers is illustrated in the following chart.

| Nominal Caliper (mm) (Mils) | Roll Footage |
|---|---|
| 0,042 (1.65) | 6,40 m (21,040) |
| 0,051 (2.00) | 5,28 m (17,365) |
| 0,101 (4.00) | 2,64 m (8,680) |
| 0,152 (6.00) | 1,76 m (5,785) |

As can be seen, the footage of 0,042 mm (1.65 mil) material is almost four times more than the material at 0,152 mm (6.0 mils). If cross directional gauge (caliper) variation of only plus and minus 0,00127 mm (0.05 mils) is considered around the nominal values shown in the above chart and the cross directional gauge variation was continuous throughout the roll, the resultant roll diameter at the location of those caliper values can then be calculated.

| Caliper | Roll Caliper Diam. | Roll Caliper Diam. | Roll Caliper Diam. | Roll Diam. |
|---|---|---|---|---|
| 0,04 (1.60) | 599mm (23.66) 0,049 (1.95) | 602,7mm (23.73) 0,1 (3.95) | 606mm (23.86) 0,151 (5.95) | 607,3 (23.91) |
| 0,043 (1.70) | 617,98mm (24.33) 0,052 (2.05) | 616,7mm (24.28) 0,103 (4.05) | 613,2mm (24.14) 0,153 (6.05) | 611,9 (24.09) |
| Differences | 17mm (0.67) | 13,97mm (0.55) | 7,1mm (0.28) | 4,57mm (0.18) |

The above chart therefore demonstrates that material made at a nominal caliper of 0,042 mm (1.65 mils)with a plus and minus 0,00127 mm (0.05 mil) variation could theoretically have a gauge band (hill and valley effect) of 17 mm (0.67 inches), whereas, material at 0,152 mm (6.00 mils) at the same cross directional variation would have only a difference of 4,57 mm (0.18 inches).

The addition of the thin foam layer is not considered to improve the cross directional caliper variation as extruded. Its function in improving the roll quality with less gauge band effect is due to its compressive nature whereby the thicker areas are compressed with conceivably a pushing of the material toward adjacent lower areas. Due to the thin nature of this thin foam layer, its mechanism for significantly improving the roll quality may not be fully defined. Its benefits are, however, dramatic. Material extruded from a stationary annular die of thin caliper (such as 0,076 mm (3mil) or less) has at times generated rolls which have been literally oval on one side and round on the other side. It has then been demonstrated that by simply adding the thin foam layer without further adjustment, the rolls then produced would be consistent side to side nearly equal in hardness across the roll face. This in effect changed a totally unacceptable situation into a viable commercial process.

The preferred plastic resin types for the labeling material are rubber modified impact polystyrene or styrene-butadiene copolymers. Such materials are economical compared to many other plastic resins and provide a greater stiffness compared to olefinic type resins.

A common problem in producing thin gauge sheet materials is that even minor caliper variations in the cross direction of the sheet produce severe gauge bands which create permanent wavy distortions in the sheet and the rolls generated have severe soft and tight areas without continuous horizontal surface and often not remaining level on an even surface. Thin caliper material has more footage in a roll at any given roll diameter compared to thicker gauge materials which means that these gauge variations are multiplied many more times over per roll.

In making the coextruded substrate, a stationary annular die is preferred over a stationary flat die due to the enhancement of cross directional orientational properties achieved by use of the annular die if the label is used as a shrinkable label. While the machine directional orientation is preferred to be greater than the cross directional orientation, insufficient cross directional orientation will make the sheet sensitive to breaking when folded along the machine directional axis. Labels produced from such material could hence fail to perform as required in application.

Label stock is currently being produced from foam (expanded) polystyrene and foam polystyrene coextruded to have a thin layer of unfoamed polystyrene on one or both surfaces. This unfoamed surface improves the smoothness of the sheet to enhance printing quality but the surface smoothness may still be deficient for many applications and more stringent customer requirements. Such material may also be deficient in toughness according to present standards due to the increases in labeling speeds and finished product packaging, handling and transporting requirements.

In accordance with the invention, the solution to the referenced problems was found whereby a stationary annular coextrusion die was utilized to produce a thermoplastic sheet material, essentially film-like in nature consisting of two layers. A rotary annular die may also be used. The predominate unfoamed layer consists of a rubber modified high impact polystyrene or styrene-butadiene copolymer to which titanium dioxide is added to provide a white opaque appearance. This predominate layer represents 75-85% by weight of the total structure and hence provides the strength with surface smoothness essential for the label requirements.

Coextruded onto the predominate unfoamed styrenic layer 11 as a backing is a thin foam layer 12 which would represent about 15-25% by weight of the total structure. This foam layer backing has a compressive nature which can be activated during the winding of the roll resulting in compression in thick caliper areas and conceivably some expansion in thickness of the cellular skin layer in the low caliper areas. Such expansion is expected since the cellular structure is blown using carbon dioxide gas which leaves the cells immediately upon exit from the extrusion die. Due to the low pressure within the cells, created by the sudden loss of carbon dioxide gas, air migrates into the cells to create some expansion if unrestricted by tension pressure of winding the roll such as occurs in thinner caliper areas.

In addition to the contributions the thin foam layer makes in minimizing web distortions, which would otherwise result from gauge bands, the thin foam layer has other benefits. The tiny cells (bubbles) comprising its structure form a textured somewhat irregular surface pattern more receptive than a smooth surface to the application of hot melt adhesives as used to attach the label to the bottle. The thin foam layer also has some surface cells that have expanded excessively to break and form tiny cavities into which a hot melt adhesive will flow and hence further improve the adhesion of the label to the container. The net effect of this improvement in adhesion due to the textured pattern and the cavities formed is that the amount of adhesive may be reduced as a cost reduction feature. Since the thin foam layer is in itself a fragile structure, it delaminates (tears) from the label to remain with the hot melt adhesive on the container. Labeling machine operators associate this with fiber tear as experienced with paper and therefore can more easily adjust to the minimum amount of adhesive application.

Also, the reality of a container labeling process is that all labels are not applied perfectly. Consequently, labels must be removed (stripped) from some containers and the containers relabeled. This is where another benefit of the thin foam layer is evident. The total thickness of the thin film layer is typically between 0,0127-0,0254 mm (0.5-1.0 mils). When the label is applied to a container with hot melt adhesive and then torn away from the container, the thin foam layer splits leaving a portion of the thin foam layer on the label and a portion on the adhesive layer applied to the bottle. Assuming this fragmentation left part of the foam on the label and part of the foam on the bottle, the residue on the bottle consists of soft compressible fragments less than 0,0102 mm (0.4 mils) in thickness. The container can hence be relabeled with minor, if any, perceptual effects from the residue which adds to the efficiency of the labeling process.

While the material in accordance with the invention may be surface printed and a layer of varnish over-gloss applied over the printed surface and directly utilized as an economical label in many applications, its utility can be further enhanced for applications requiring more durable service. For such applications, the described high impact polystyrene unfoamed layer can be surface printed as before, but without application of a varnish over-gloss. Instead, a polyurethane type adhesive is applied to the substrate printed surface, and an additional non-foam layer of clear or translucent plastic 0,012-0,0254 mm (0.4-1.0 mil). One example is biaxially oriented polypropylene or biaxially oriented polyethylene. The additional layer then being laminated by passing the two combined layers through a suitable set of nip compression rollers. Alternatively, the clear biaxially oriented polyolefin film can be reversed printed (mirror image) such that the art work is viewed correctly and then combining the two layers by adhesive lamination through compression rollers and winding the resultant laminated structured material into roll form where the two components of the adhesive react and cure to complete the adhesive bond. Biaxially oriented polyolefin film provides more strength with higher tear and chip resistance than mono-axially oriented polyolefin film.

The addition of the layer of biaxially oriented polyolefin significantly improves the resultant label strength by making it highly resistant to tearing and chipping. Additionally, by covering the printed ink material with the protective polyolefin film, it is highly protected from scuffing as when adjacent containers rub together in transit, or chipping as when containers strike hard surfaces during product use. Also, the printed surface is protected from any chemical attack which could occur at times through the use of the container. Since the laminated polyolefin clear film provides protection for the printed matter, softer type inks can be utilized which are less expensive and yet are capable of being run at higher printing press speeds for additional economy in converting. The clear or translucent laminated film also adds sparkle and gloss with a perception of depth in the printed detail which greatly adds to the attraction of the label appearance.

## Claims

1. A label material for use in wrapping hollow containers comprising
a coextruded substrate (10) comprising a thick styrenic unfoamed plastic layer (11) and a thin styrenic foam layer (12), said unfoamed plastic layer (11) comprising the predominant portion of said label material as contrasted to the foam layer (12), said unfoamed layer (11) comprising 75-85% by weight and said foam layer (12) comprising 15-25% by weight, said total thickness of said coextruded sheet substrate (10) ranges between 0,0381 mm (1.5 mils) and 0,0762 mm (3.0 mils).

2. The label material set forth in claim 1 wherein said thick styrenic unfoamed layer (11) has a thickness ranging between 0,03175 mm (1.25 mils) to 0,05715 mm (2.25 mils) and the styrenic foam layer (12) has a thickness ranging between 0,0127 mm (o.5 mils) and 0,0254 mm (1.0 mils).

3. The label material set forth in claim 1 or 2 wherein said thick styrenic unfoamed layer (11) has a thickness ranging between 0,03175 mm (1.25 mils) and 0,033 mm (1.30 mils) and the styrenic foam layer (12) has a thickness between 0,0127 mm (o.5 mils) and 0,0254 mm (1.0 mils).

4. The label material set forth in claims 1 to 3 wherein said styrenic unfoamed layer (11) and styrenic foam layer (12) comprise polystyrene.

5. The label material set forth in any of claims 1-4 wherein said styrenic foam layer (12) comprises a blend of medium impact polystyrene, polypropylene and a compatibility agent.

6. The label material set forth in any of claims 1-5 wherein said styrenic foam layer (12) has been made by utilizing carbon dioxide as a blowing agent.

7. The label material set forth in any of claims 1-6 wherein said foam layer (12) has a denisty ranging between 320 kg/m³ (20 lbs/ft³) and 384 kg/m³ (24 lbs/ft³).

8. The label material set forth in any of claims 4 to 7 wherein said label material is shrinkable in a machine direction.

9. The label material set forth in any one of claims 1 to 8 including printing (16) on said unfoamed layer (11).

10. The label material set forth in any one of claims 1 to 9 including an additional unfoamed layer (15) of clear or translucent plastic material bonded to said styrenic unfoamed layer (11) of said coextruded substrate (10).

11. The label material set forth in claim 10 wherein said unfoamed layer (15) is bonded by an adhesive (17).

12. The label material set forth in claim 10 or 11 wherein said unfoamed layer (15) of clear or translucent plastic material comprises biaxially oriented polypropylene.

13. The label material set forth in claim 10 or 11 wherein said unfoamed layer (15) of clear or translucent plastic material comprises polystyrene.

14. The label material set forth in any of claims 10 to 13 wherein said unfoamed layer (15) of clear or translucent plastic comprises polyethylene.

15. The label material set forth in any of claims 10 to 14 wherein said coextruded substrate (10) and said additional layer (15) having a machine direction orientation in the same direction and a cross direction orientation which is less than the machine direction orientation.

16. A package comprising
a hollow container and
a label including the label material set forth in any of claims 1 to 15, said label material being wrapped about said hollow container.

17. A method of making label material for use in wrapping hollow containers comprising
coextruding a substrate (10) comprising a thick styrenic unfoamed plastic layer (11) and a thin styrenic foam layer (12),
said unfoamed layer (11) comprising 75-85% by weight and said foam layer (12) comprising 15-25% by weight, and controlling the thickness of said layers (11, 12) such that said total thickness of said coextruded sheet (10) ranging between 0,038 mm (1.5 mils) and 0,0762 mm (3.0 mils).

18. The method set forth in claim 17 including the step of controlling the thicknesses of said layers (11, 12) such that said thick unfoamed layer (11) has a thickness ranging between 0,03175 mm (1.25 mils) to 0,05715 mm (2.25 mils) and the foam layer (12) has a thickness ranging between 0,0127 mm (o.5 mils) and 0,0254 mm (1.0 mils).

19. The method set forth in claim 17 or 18 including the step of controlling the thickness of said layers (11, 12) such that said thick unfoamed layer (11) has a thickness ranges between 0,03175 mm (1.25 mils) and 0,033 mm (1.30 mils) and the foam layer (12) has a thickness between 0,0127 mm (0.5 mils) and 0,0254 mm (1.0 mils).

20. The method set forth in any one of claims 17 to 19 wherein said step of coextruding comprises coextruding said styrenic unfoamed layer (11) and foam layer (12) from polystyrene.

21. The method set forth in claim 20 wherein said step of coextruding comprises coextruding said styrenic foam layer (12) comprising a blend of medium impact polystyrene, polypropylene and a compatibility agent.

22. The method set forth in any of claims 17 to 21 wherein said step of coextruding comprises coextruding said foam layer (12) utilizing carbon dioxide as a blowing agent.

23. The method set forth in any one of claims 17 to 22 including the step of printing on said unfoamed layer.

24. The method set forth in any one of claims 17 to 23 including the step of stretching said coextruded label material such that it is shrinkable in a machine direction.

25. The method set forth in any one of claims 17 to 24 including the step of bonding a clear or translucent unfoamed layer (15) of plastic material to said unfoamed layer of said coextruded substrate (10).

26. The method set forth in claim 25 wherein said step of bonding said layers is by using an adhesive.

27. The method set forth in any of claims 17 to 26 wherein said step of coextruding comprises coextruding said unfoamed layer (11) and foam layer (12) from polystyrene.

28. The method set forth in claim 25 to 27 wherein said clear or translucent unfoamed layer (15) of plastic comprises biaxially oriented polypropylene.

29. The method set forth in claims 25 to 27 wherein said clear or translucent unfoamed layer (15) of plastic comprises biaxially oriented polystyrene.

30. The method set forth in any of claims 25 to 29 wherein said unfoamed layer (15) of clear or translucent plastic comprises polyethylene.

31. The method set forth in any of claims 26 to 30 including controlling the orientation such that the layers have machine direction orientation.

## Patentansprüche

1. Etikettenmaterial zum Umwickeln von hohlen Behältern umfaßt
ein koextrudiertes Substrat (10), welches eine dicke ungeschäumte Styrolkunststoffschicht (11) und eine dünne geschäumte Styrolschicht (12) umfaßt, wobei die ungeschäumte Kunststoffschicht (11) gegenüber der geschäumten Schicht (12) den überwiegenden Teil des Etikettenmaterials umfaßt, wobei die ungeschäumte Schicht (11) 75-85% der Gewichtsanteile und die geschäumte Schicht (12) 15-25% der Gewichtsanteile umfassen, wobei die Gesamtdicke der koextrudierten Substratfolie (10) in einem Bereich zwischen 0,0381 mm (1,5 mils) und 0,0762 mm (3,0 mils) liegt.

2. Etikettenmaterial nach Anspruch 1, bei dem die dicke, ungeschäumte Styrolschicht (11) eine Dicke im Bereich zwischen 0,03175 mm (1,25 mils) bis 0,05715 mm (2,25 mils) und die geschäumte Styrolschicht (12) eine Dicke im Bereich zwischen 0,0127 mm (0,5 mils) und 0,0254 mm (1,0 mils) besitzen.

3. Etikettenmaterial nach Anspruch 1 oder 2, bei dem die dicke, ungeschäumte Styrolschicht (11) eine Dicke im Bereich von 0,03175 mm (1,25 mils) und 0,033 mm (1,30 mils) und die geschäumte Styrolschicht (12) eine Dicke zwischen 0,0127 mm (0,5 mils) und 0,0254 mm (1,0 mils) besitzen.

4. Etikettenmaterial nach den Ansprüchen 1-3, bei dem die ungeschäumte Styrolschicht (11) und die geschäumte Styrolschicht (12) Polystyrol umfassen.

5. Etikettenmaterial nach einem der Ansprüche 1-4, bei dem die geschäumte Styrolschicht (12) eine Mischung aus mittelhartem Polystyrol, Polypropylen und einem Kompatibilitätszusatzstoff umfaßt.

6. Etikettenmaterial nach einem der Ansprüche 1-5, bei dem die geschäumte Styrolschicht (12) durch den Einsatz von Karbondioxid als Schäumstoff hergestellt worden ist.

7. Etikettenmaterial nach einem der Ansprüche 1-6, bei dem die geschäumte Schicht (12) eine Dichte im Bereich zwischen 320 kg/m³(20 lbs pro ft³) und 384 kg/m³ (24 lbs/ft³) besitzt.

8. Etikettenmaterial nach einem der Ansprüche 4-7, bei dem das Etikettenmaterial in einer Maschinenlaufrichtung schrumpfbar ist.

9. Etikettenmaterial nach einem der Ansprüche 1-8, welches einen Aufdruck (16) auf der ungeschäumten Schicht (11) umfaßt.

10. Etikettenmaterial nach einem der Ansprüche 1-9, welches eine zusätzliche ungeschäumte Schicht (15) aus klarem oder durchscheinendem Kunststoff umfaßt, die mit der ungeschäumten Styrolschicht (11) des koextrudierten Substrats (10) verbunden ist.

11. Etikettenmaterial nach Anspruch 10, bei dem die Verbindung der ungeschäumten Schicht (15) durch einen Kleber (17) erfolgt.

12. Etikettenmaterial nach Anspruch 10 oder 11, bei dem die ungeschäumte Schicht (15) aus klarem oder durchscheinendem Kunststoff biaxial ausgerichtetes Polypropylen umfaßt.

13. Etikettenmaterial nach Anspruch 10 oder 11, bei dem die aus klarem oder lichtdurchlässigem Kunststoff bestehende ungeschäumte Schicht (15) Polystyrol umfaßt.

14. Etikettenmaterial nach einem der Ansprüche 10-13, bei dem die aus klarem oder lichtdurchlässigem Kunststoff bestehende ungeschäumte Schicht (15) Polyäthylen umfaßt.

15. Etikettenmaterial nach einem der Ansprüche 10-14, bei dem das koextrudierte Substrat (10) und die zusätzliche Schicht (15) eine Materialausrichtung infolge Maschinenlaufs in der gleichen Richtung und eine Materialausrichtung quer hierzu besitzen, die geringer als die Ausrichtung in Maschinenlaufrichtung ist.

16. Verpackung, die einen hohlen Behälter und ein Etikett umfaßt, welches das Etikettenmaterial nach einem der Ansprüche 1-15 umfaßt, wobei das Etikettenmaterial um den hohlen Behälter gewickelt ist.

17. Verfahren zum Herstellen von Etikettenmaterial in der Anwendung zum Umwickeln von hohlen Behältnissen, mit folgenden Schritten:
ein Substrat (10) wird koextrudiert, das eine dicke, ungeschäumte Styrolkunststoffschicht (11) und eine dünne geschäumte Styrolschicht (12) umfaßt,
wobei die ungeschäumte Schicht (11) einen Gewichtsanteil von 75-85% und die geschäumte Schicht (12) einen Gewichtsanteil von 15-25% umfaßt,
wobei das Verfahren die Dicke der Schichten (11, 12) so steuert, daß die Gesamtdicke der koextrudierten Folie (10) in einem Bereich zwischen 0,038 mm (1,5 mils) und 0,0762 mm (3,0 mils) liegt.

18. Verfahren nach Anspruch 17 mit folgendem Schritt:
die Dicke der Schichten (11, 12) wird so gesteuert, daß die dicke, ungeschäumte Schicht (11) eine Dicke im Bereich zwischen 0,03175 mm (1,25 mils) bis 0,05715 mm (2,25 mils) und die geschäumte Schicht (12) eine Dicke im Bereich von 0,0127 mm (0,5 mils) und 0,0254 mm (1,0 mils) besitzen.

19. Verfahren nach Anspruch 17 oder 18 mit folgendem Schritt:
die Dicke der Schichten (11, 12) wird so gesteuert, daß die dicke, ungeschäumte Schicht (11) eine Dicke im Bereich zwischen 0,03175 mm (1,25 mils) und 0,033 mm (1,30 mils) und die geschäumte Schicht (12) eine Dicke zwischen 0,0127 mm (0,15 mils) und 0,0254 mm (1,0 mils) besitzen.

20. Verfahren nach einem der Ansprüche 17-19, bei dem der Schritt des gemeinsamen Strangpressens das Koextrudieren der ungeschäumten Styrolschicht (11) und der geschäumten Schicht (12) aus Polystyrol umfaßt.

21. Verfahren nach Anspruch 20, bei dem Schritt des gemeinsamen Strangpressens das Koextrudieren der geschäumten Styrolschicht (12) umfaßt, die eine Mischung aus mittelhartem Polystyrol, Polypropylen und einem Kompatibilitätsstoff umfaßt.

22. Verfahren nach einem der Ansprüche 17-21 bei dem der Schritt des gemeinsamen Strangpressens das Koextrudieren der geschäumten Schicht (12), mit Karbondioxid als Aufschäumstoff, umfaßt.

23. Verfahren nach einem der Ansprüche 17-22, das den Schritt des Bedruckens auf die ungeschäumte Schicht umfaßt.

24. Verfahren nach einem der Ansprüche 17-23, das den Schritt des Streckens des koextrudierten Etikettenmaterials umfaßt, so daß es in der Maschinenlaufrichtung schrumpfbar ist.

25. Verfahren nach einem der Ansprüche 17-24, das den Schritt des Anbindens einer klaren oder lichtdurchlässigen ungeschäumten Schicht (15) aus Kunststoff, an die ungeschäumte Schicht des gemeinsam stranggepreßten Substrats (10) umfaßt.

26. Verfahren nach Anspruch 25, bei dem der Schritt des Anbindens der Schichten durch den Einsatz eines Klebers geschieht.

27. Verfahren nach einem der Ansprüche 17-26, bei dem der Schritt des gemeinsamen Strangpressens das Koextrudieren der ungeschäumten Schicht (11) und der geschäumten Schicht (12) aus Polystyrol umfaßt.

28. Verfahren nach einem der Ansprüche 25-27, bei dem die aus klarem oder Iichtdurchlässigem Kunststoff bestehende ungeschäumte Schicht (15) biaxial ausgerichtetes Polypropylen umfaßt.

29. Verfahren nach einem der Ansprüche 25-27, bei dem die aus klarem oder lichtdurchlässigem Kunststoff bestehende ungeschäumte Schicht (15) biaxial ausgerichtetes Polystyrol umfaßt.

30. Verfahren nach einem der Ansprüche 25-29, bei dem die aus klarem oder lichtdurchlässigem Kunststoff bestehende ungeschäumte Schicht (15) Polyäthylen umfaßt.

31. Verfahren nach einem der Ansprüche 26-30, bei dem die Ausrichtung so gesteuert wird, daß die Schichten eine Ausrichtung in Maschinenlaufrichtung besitzen.

## Revendications

1. Matériau pour étiquette destinée à envelopper des récipients creux, qui comprend un support coextrudé (10) comportant une couche épaisse (11) en matière plastique styrénique qui n'est pas sous forme de mousse (c'est-à-dire non-expansée), et une couche mince (12) en mousse styrénique, ladite couche (11) de matière plastique non-expansée constituant la partie dudit matériau pour étiquette qui est prédominante par rapport à la couche de mousse (12), ladite couche (11) non-expansée représentant 75-85 % en poids et ladite couche de mousse (12) représentant 15-25 % en poids, et ladite épaisseur totale dudit support coextrudé (10) étant comprise entre 0,0381 mm (1,5 millième de pouce) et 0,0762 mm (3,0 millièmes de pouce).

2. Matériau pour étiquette selon la revendication 1, dans lequel ladite couche épaisse (11) en matière plastique styrénique non-expansée a une épaisseur comprise entre 0,03175 mm (1,25 millième de pouce) et 0,05715 mm (2,25 millièmes de pouce) et la couche de mousse styrénique (12) a une épaisseur comprise entre 0,0127 mm (0,5 millième de pouce) et 0,0254 mm (1,0 millième de pouce).

3. Matériau pour étiquette selon la revendication 1 ou 2, dans lequel ladite couche épaisse (11) en matière plastique styrénique non-expansée a une épaisseur comprise entre 0,03175 mm (1,25 millième de pouce) et 0,033 mm (1,30 millième de pouce) et la couche (12) de mousse styrénique a une épaisseur comprise entre 0,0127 mm (0,5 millième de pouce) et 0,0254 mm (1,0 millième de pouce).

4. Matériau pour étiquette selon l'une quelconque des revendications 1 à 3, pour lequel ladite couche (11) en matière plastique styrénique non-expansée et ladite couche (12) de mousse styrénique renferment du polystyrène.

5. Matériau pour étiquette selon l'une quelconque des revendications 1 à 4, pour lequel ladite couche (12) de mousse styrénique renferme un mélange de polystyrène de résistance moyenne au choc, de polypropylène et d'un agent pour la compatibilité.

6. Matériau pour étiquette selon l'une quelconque des revendications 1 à 5, pour lequel on a fabriqué ladite couche (12) de mousse styrénique en utilisant du dioxyde de carbone comme agent d'expansion.

7. Matériau pour étiquette selon l'une quelconque des revendications 1 à 6, pour lequel ladite couche (12) de mousse a une masse volumique comprise entre 320 kg/m³ (20 livres/pied³) et 384 kg/m³ (24 livres/pied³).

8. Matériau pour étiquette selon l'une quelconque des revendications 4 à 7, qui est rétrécissable dans une direction machine.

9. Matériau pour étiquette selon l'une quelconque des revendications 1 à 8, qui comporte des motifs (16) imprimés sur ladite couche (11) de matière plastique non-expansée.

10. Matériau pour étiquette selon l'une quelconque des revendications 1 à 9, qui comporte une couche non-expansée supplémentaire (15) de matière plastique limpide ou translucide, liée à ladite couche styrénique non-expansée (11) dudit support coextrudé (10).

11. Matériau pour étiquette selon la revendication 10, dans lequel ladite couche non-expansée (15) est liée par l'intermédiaire d'un adhésif (17).

12. Matériau pour étiquette selon la revendication 10 ou 11, pour lequel ladite couche non-expansée (15) de matière plastique limpide ou translucide renferme du polypropylène biaxialement orienté.

13. Matériau pour étiquette selon la revendication 10 ou 11, pour lequel ladite couche non-expansée (15) de matière plastique limpide ou translucide renferme du polystyrène.

14. Matériau pour étiquette selon l'une quelconque des revendications 10 à 13, pour lequel ladite couche non-expansée (15) de matière plastique limpide ou translucide renferme du polyéthylène.

15. Matériau pour étiquette selon l'une quelconque des revendications 10 à 14, pour lequel ledit support coextrudé (10) et ladite couche supplémentaire (15) ont une orientation dans la direction machine dans la même direction et une orientation dans la direction transversale qui est inférieure à l'orientation dans la direction machine.

16. Emballage comprenant un récipient creux et une étiquette renfermant le matériau pour étiquette selon l'une quelconque des revendications 1 à 15, ledit matériau pour étiquette enveloppant ledit récipient creux.

17. Procédé de préparation d'un matériau pour étiquette destinée à envelopper des récipients creux, qui comprend la coextrusion d'un support (10) comportant une couche épaisse (11) de matière plastique styrénique non-expansée, et une couche mince (12) de mousse styrénique, ladite couche non-expansée (11) représentant 75-85 % en poids et ladite couche de mousse (12) représentant 15-25 % en poids, et le réglage de l'épaisseur desdites couches (11, 12) de telle manière que l'épaiseur totale dudit support coextrudé (10) soit comprise entre 0,038 mm (1,5 millième de pouce) et 0,0762 mm (3,0 millièmes de pouce).

18. Procédé selon la revendication 17, qui comprend l'étape de réglage de l'épaisseur desdites couches (11, 12) de telle manière que ladite couche épaisse non-expansée (11) ait une épaisseur comprise entre 0,03175 mm (1,25 millième de pouce) et 0,05715 mm (2,25 millièmes de pouce) et la couche de mousse (12) ait une épaisseur comprise entre 0,0127 mm (0,5 millième de pouce) et 0,0254 mm (1,0 millième de pouce).

19. Procédé selon la revendication 17 ou 18, qui comprend l'étape de réglage de l'épaisseur desdites couches (11, 12) de telle manière que ladite couche épaisse non-expansée (11) ait une épaisseur comprise entre 0,03175 mm (1,25 millième de pouce) et 0,033 mm (1,30 millième de pouce) et la couche de mousse (12) ait une épaisseur comprise entre 0,0127 mm (0,5 millième de pouce) et 0,0254 mm (1,0 millième de pouce).

20. Procédé selon l'une quelconque des revendications 17 à 19, dans lequel ladite étape de coextrusion comprend la coextrusion desdites couche styrénique non-expansée (11) et couche de mousse (12) renfermant du polystyrène.

21. Procédé selon la revendication 20, dans lequel ladite étape de coextrusion comprend la coextrusion de ladite couche de mousse styrénique (12) renfermant un mélange de polystyrène de résistance moyenne au choc, de polypropylène et d'un agent pour la compatibilité.

22. Procédé selon l'une quelconque des revendications 17 à 21, dans lequel ladite étape de coextrusion comprend la coextrusion de ladite couche de mousse (12) formée à l'aide de dioxyde de carbone en tant qu' agent d'expansion.

23. Procédé selon l'une quelconque des revendications 17 à 22, qui comprend une étape d'impression de ladite couche non-expansée.

24. Procédé selon l'une quelconque des revendications 17 à 23, qui comprend une étape d'étirage dudit matériau coextrudé pour étiquette de telle manière qu'il soit rétrécissable dans une direction machine.

25. Procédé selon l'une quelconque des revendications 17 à 24, qui comprend l'étape de liaison d'une couche non-expansée (15) de matière plastique limpide ou translucide à ladite couche non-expansée dudit support coextrudé (10).

26. Procédé selon la revendication 25, dans lequel on réalise ladite étape de liaison desdites couches en utilisant un adhésif.

27. Procédé selon l'une quelconque des revendications17 à 26, dans lequel ladite étape de coextrusion comprend la coextrusion desdites couche non-expansée (11) et couche de mousse (12) renfermant du polystyrène.

28. Procédé selon l'une quelconque des revendications 25 à 27, dans lequel ladite couche non-expansée (15) de matière plastique limpide ou translucide renferme du polypropylène biaxialement orienté.

29. Procédé selon l'une quelconque des revendications 25 à 27, dans lequel ladite couche non-expansée (15) de matière plastique limpide ou translucide renferme du polystyrène biaxialement orienté.

30. Procédé selon l'une quelconque des revendications 25 à 29, dans lequel ladite couche non-expansée (15) de matière plastique limpide ou translucide renferme du polyéthylène.

31. Procédé selon l'une quelconque des revendications 26 à 30, qui comprend le réglage de l'orientation de telle manière que les couches aient une orientation dans la direction machine.
